**Europäisches Patentamt**

**European Patent Office**

**Office européen des brevets**

(11) Publication number: **0 338 128 B1**

# EUROPEAN PATENT SPECIFICATION

(45) Date of publication of patent specification: **14.04.93** (51) Int. Cl.5: **C08J 5/08**, C08L 65/00

(21) Application number: **88120608.0**

(22) Date of filing: **09.12.88**

(54) **Glass fiber-reinforced norbornene polymer and process for production thereof.**

(30) Priority: **15.04.88 JP 91264/88**

(43) Date of publication of application:
**25.10.89 Bulletin 89/43**

(45) Publication of the grant of the patent:
**14.04.93 Bulletin 93/15**

(84) Designated Contracting States:
**BE DE FR GB IT NL SE**

(56) References cited:
**EP-A- 0 181 641**
**US-A- 4 140 843**
**US-A- 4 448 917**

**PATENT ABSTRACTS OF JAPAN, vol. 12, no.
128 (C-489)[2975], 20th April 1988, page 22 C
489**

(73) Proprietor: **NIPPON ZEON KABUSHIKI KAISHA
6-1, Marunouchi 2-chome
Chiyoda-ku Tokyo(JP)**

(72) Inventor: **Sugawara, Tomoo
481, Miyauchi Nakahara-ku
Kawasaki-shi Kanagawa(JP)**
Inventor: **Yamato, Motoyuki
Ooiso Koma Haitsu 2-232 2-21, Koma Ooiso-
cho
Naka-gun Kanagawa(JP)**

(74) Representative: **von Kreisler, Alek,
Dipl.-Chem. et al
Patentanwälte Von Kreisler-Selting-Werner,
Deichmannhaus am Hauptbahnhof
W-5000 Köln 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.5x/3.0.1)

## Description

The present invention relates to a glass fiber-reinforced norbornene polymer composition. More particularly, the present invention relates to a glass fiber-reinforced norbornene polymer composition having an excellent mechanical strength, which comprises a glass long fiber as the reinforcer.

Prior Art

Bulk polymerization of a norbornene monomer such as dicyclopentadiene or methyltetracyclododecene in a mold is known, and it also is known that a filler, a glass fiber or other reinforcer is made present in this bulk polymerization.

For example, Japanese Unexamined Patent Publication No. 58-129,013 discloses a process for preparing a thermosetting homopolymer of dicyclopentadiene (DCP) by the reactive injection molding method (RIM method) using a methathesis catalyst system. According to a preferred embodiment of this process, the homopolymer is prepared by mixing one solution composed of a mixture of a catalyst component of the methathesis catalyst such as a tungsten halide or tungsten oxyhalide and a monomer (DCP) with another solution composed of a mixture of an activator of the methathesis catalyst system such as an alkylaluminum halide and the monomer (DCP) at a reactive injection molding machine (RIM machine) and casting the mixture into a mold. Furthermore, it is taught that a filler-containing DCP homopolymer is obtained by adding a filler such as a glass, carbon black, talc or calcium carbonate to the reaction solution or charging the filler in the cavity of a mold in advance. However, the effect of improving the physical properties by this use of the filler is insufficient. Moreover, in this process, the two reaction solutions are instantaneously solidified into a bulk in the mold substantially by impinging mixing. Therefore, use of a fibrous filler or a long fiber reinforcer in this process is not suitable.

Japanese Unexamined Patent Publication No. 59-51,911 discloses a process for the ring-opening bulk polymerization of a cycloolefin having a norbornene ring, in which the polymerization is carried out by the RIM method using a methathesis catalyst system. Use of an activator prolonging the pot life, such as an alkoxyalkyl aluminum halide or an aryloxyalkyl aluminum halide, in this bulk polymerization process is proposed. It is taught that in this bulk polymerization process, a long fiber is incorporated as the reinforcer. However, if a long glass fiber is used, the polymerization of a norbornene monomer tends to be inhibited, and when the filling ratio is high, this tendency is conspicuous and only a product having insufficient physical properties is obtained.

Ring-opened polymers obtained according to these known processes have relatively acceptable physical properties required for engineering plastics, such as impact resistance, elastic modulus and heat resistance, but it cannot be said that these polymers completely satisfy recent severe requirements. Where a norbornene polymer is reinforced by a glass fiber, if a short fiber such as a milled fiber is used, the improvement of the mechanical strength is insufficient, and if a long glass fiber is used, an uncured portion is formed by inhibition of the polymerization and the obtained polymer does not have satisfactory physical properties. Especially, if a long glass fiber is incorporated at a high filling ratio, only a molded article having poor physical properties is obtained.

Problem to Be Solved by the Invention

It is an object of the present invention to provide a glass fiber-reinforced norbornene polymer having excellent physical properties such as the mechanical strength by using a long glass fiber.

Another object of the present invention is to provide a process for preparing a glass fiber-reinforced norbornene polymer having an excellent adhesion between the glass fiber and polymer without inhibiting ring-opening polymerization of the norbornene monomer.

The present inventors carried out research with a view to overcoming the defects of the conventional techniques, and as a result, found that a reinforced material having high physical properties can be obtained by using a glass fiber surface-treated with a specific silane coupling agent, and the present invention was completed based on this finding.

[Means for Solving the Problem]

More specifically, the gist of the present invention resides in (1) a glass fiber-reinforced norbornene polymer comprising a long glass fiber surface-treated with an amino group-containing silane coupling agent and a polymer obtained by ring-opening bulk polymerization of a norbornene polymer having a tricyclic or higher cyclic structure, and (2) a process for the production of a glass fiber-reinforced norbornene polymer, which comprises subjecting a norbornene monomer having a tricyclic or higher cyclic structure to ring-opening bulk polymerization by using a methathesis catalyst in the presence of a long glass fiber surface-treated with an amino group-containing silane coupling agent.

The structural elements of the present invention will now be described in detail.

(Norbornene monomer)

The monomer used as the starting material of the norbornene polymer in the present invention is polycyclic norbornene monomer having a tricyclic or higher cyclic structure. Since the norbornene monomer having a tricyclic or higher cyclic structure is used, a polymer having a high heat distortion temperature is obtained.

In the present invention, preferably the formed polymer is the heat-setting type. For this purpose, a crosslinking monomer is preferably used.

As the norbornene monomer having a tricyclic or higher cyclic norbornene monomer, there can be mentioned tricyclic monomers such as dicyclopentadiene and dihydrodicyclopentadiene, tetracyclic monomers such as tetracyclododecene, pentacyclic monomers such as tricyclopentadiene, heptacyclic monomers such as tetracyclopentadiene, alkyl substitution products thereof (for example, methyl, ethyl, propyl and butyl substitution products) and alkylidene substitution products thereof (e.g., ethylidene substitution products).

In view of the availability, the reactivity and the heat resistance, use of a tricyclic monomer or pentacyclic monomer is recommended.

The crosslinking monomer is a polycyclic norbornene monomer having at least two reactive double bonds. For example, there can be mentioned dicyclopentadiene, tricyclopentadiene and tetracyclopentadiene. Where the norbornene monomer is the same as the crosslinking monomer, other crosslinking monomer need not particularly be used.

These norbornene monomers can be used singly or in the form of a mixture of two or more thereof.

The norbornene monomer having a tricyclic or higher cyclic monomer can be obtained by heat-treating a dicyclopentadiene. As the heat treatment method, there can be mentioned a method in which a dicyclopentadiene is heated at a temperature of 120 to 250°C in an inert gas atmosphere for 0.5 to 20 hours. By this heat treatment, a monomer mixture comprising pentacyclopentadecadiene and the unreacted dicyclopentadiene is obtained.

In the present invention, a bicyclic norbornene monomer that can be ring-opening-polymerized, such as 2-norbornene, 5-methyl-2-norbornene or 5-ethylidene-2-norbornene, or a monocyclic cyclo-olefin such as cyclobutene, cyclopentene, cyclopentadiene, cyclooctene or cyclododecene can be used together with at least one of the above-mentioned norbornene monomers having a tricyclic or higher cyclic structure, as long as the attainment of the object of the present invention is not prevented.

(Methathesis catalyst)

In the present invention, any of known methathesis catalyst systems (see, for example, Japanese Unexamined Patent Publications No. 58-127,728, No. 58-129,013, No. 59-51,911, No. 60-79,035, No. 60-186,511 and No. 61-126,115) can be used without limitation for the bulk polymerization of the norbornene monomer.

As the methathesis catalyst, there can be mentioned halides, oxyhalides, oxides, and organic ammonium salts of tungsten, molybdenum, and tantalum. Alkylaluminum halides, alkoxyalkylaluminum halides, aryloxyalkylaluminum halides and organic tin compounds can be used as the activator (co-catalyst).

An alkylaluminum halide involves a problem in that polymerization is instantaneously started when it is mixed with the catalyst, but the start of the polymerization can be delayed by using a polymerization controller such as an ether, an ester, a ketone, a nitrile or an alcohol in combination with the activator (see, for example, Japanese Unexamined Patent Publications No. 58-129,013 and No. 61-120,814). If such a polymerization controller is not used, the apparatus and operation must be controlled so that a catalyst system having a short pot life can be used.

A halogenated hydrocarbon such as chloroform, carbon tetrachloride or hexachlorocyclopentadiene can be used in combination with the catalyst and activator (see, for example, Japanese Unexamined Patent Publication No. 60-79,035). Moreover, a metal halide such as silicon tetrachloride, lead tetrachloride or germanium tetrachloride can be further added.

The methathesis catalyst is used in an amount of about 0.01 to about 50 millimoles, preferably 0.1 to 10 millimoles, per mole of the norbornene monomer. The activator (co-catalyst) is used at a molar ratio of from 0.1 to 200, preferably from 2 to 10, to the catalyst component.

Preferably both the methathesis catalyst and the activator are used in the state dissolved in the monomer, but the catalyst and activator can be used in the state suspended or dissolved in a small amount of a solvent, as long as the properties of the product are not substantially degraded.

(Polymerization conditions)

In the present invention, a polymer obtained by subjecting the norbornene monomer to ring-opening bulk polymerization is used. A substantial bulk polymerization is sufficient and the presence of a small amount of an inert solvent is permissible.

According to a preferred embodiment of the process for the preparation of a ring-opened polymer, the norbornene monomer is divided into two liquid portions, which are charged into two separate vessels, the methathesis catalyst is added to one liquid while the activator is added to the other liquid, to prepare two stable reaction solutions, the two reaction solutions are mixed together, the mixture is cast in a mold having a predetermined shape, and ring-opening bulk polymerization is carried out. A simple mold can be used.

The mold temperature is generally at least 50°C, preferably from 60 to 200°C, more preferably 90 to 130°C. The casting pressure is not particularly critical, but is generally 0.1 to 100 bar (0.1 to 100 kg/cm$^2$).

The polymerization time is appropriately selected. Generally, the polymerization time is shorter than about 20 minutes, and preferably, the polymerization time is shorter than 5 minutes. However, a longer time can be adopted.

Preferably components to be used for the polymerization reaction are stored in an atmosphere of an inert gas such as nitrogen gas and the operation is carried out in this inert gas atmosphere. The mold may be or may not be sealed with an inert gas.

(Optional components)

The characteristics of the glass fiber-reinforced polymer of the present invention can be modified by the incorporation of various additives such as an antioxidant, a filler, a pigment, a colorant, an elastomer and a dicyclopentadiene type heat-polymerized resin.

As the antioxidant that can be used in the present invention, there can be mentioned a phenolic antioxidant, a phosphorus antioxidant, an amine antioxidant and other various antioxidants for plastics and rubbers.

As the filler, there can be used inorganic fillers such as glass, carbon black, talc, calcium carbonate and mica.

As the elastomer, there can be mentioned natural rubbers, polybutadiene, polyisoprene, a styrene/butadiene copolymer (SBR), a styrene/butadiene/styrene block copolymer (SBS), a styrene/isoprene/styrene block copolymer (SIS), an ethylene/propylene/diene terpolymer (EPDM), an ethylene/vinyl acetate copolymer (EVA) and hydrogenation products thereof.

These additives are incorporated in one or both of the reaction solutions or directly charged in the cavity of the mold in advance.

(Long glass fiber)

In the present invention, a long glass fiber is used as the reinforcer. No sufficient reinforcing effect can be obtained when a glass powder or a milled fiber obtained by cutting and pulverizing a glass strand is used.

As specific examples of the shape of the long glass fiber, there can be mentioned a glass strand, a roving formed by bundling glass strands, a roving cloth woven from rovings, a glass yarn formed by twisting a strand, and a glass cloth.

The long glass fiber can be appropriately cut according to the shape of the mold.

The filled amount of the long glass fiber can be optionally selected within a broad range. In the present invention, even if the filled amount of the long glass fiber is increased to about 70% by weight, the polymerization inhibition does not arise, and a polymer (i.e., molded article) having improved physical properties can be obtained.

(Amino group-containing silane coupling agent)

In the present invention, it is indispensable that of various silane coupling agents, an amino group-containing silane coupling agent must be selected and used. If other general-purpose silane coupling agent, for example, vinyl-tris(2-methoxyethoxy)silane, $\gamma$-glycidoxypropyltrimethoxysilane or $\gamma$-methacryloxypropyl-trimethoxysilane, is used, the polymerization inhibition arises and the obtained polymer contains an uncured portion.

As the amino group-containing silane coupling agent to be used in the present invention, there can be mentioned, for example, N-$\beta$-(N-vinylbenzylaminoethyl)-$\gamma$-aminopropyltrimethoxysilane, N-$\gamma$-(N-vinylben-zylaminopropyl)-$\gamma$-aminopropyltrimethoxysilane, N-$\beta$-(N-vinylbenzylaminoethyl)-$\gamma$-aminopropyltriethoxysilane, N-$\beta$-(N-vinylbenzylaminoethyl)-$\gamma$-aminopropyltri(methoxyethoxy)silane, N-$\beta$-(N-vinylbenzylaminoethyl)-$\delta$-aminobutyltrimethoxysilane, N-$\beta$-(N-propenylaminoethyl)-$\gamma$-aminopropyltrimethoxysilane, $\gamma$-aminopropyltrimethoxysilane, $\gamma$-$\beta$-benzylaminoethyl-$\gamma$-am-inopropyltrimethoxysilane, $\gamma$-aminopropyltriethoxysilane, $\gamma$-aminopropylmethyldimethoxysilane, $\gamma$-aminopropylmethyldiethoxysilane, N-$\beta$-(aminoethyl)-$\gamma$-aminopropyltrimethoxysilane, N-$\beta$-(aminoethyl)-$\gamma$-aminopropyltriethoxysilane, N-$\beta$-(aminoethyl)-$\gamma$-aminopropylmethyldimethoxysilane, N-$\beta$-aminoethyl-$\gamma$-aminopropylmethyldiethoxysilane, N-phenyl-$\gamma$-aminopropyltrimethoxysilane, and salts thereof, such as hydrochlorides, nitrates, acetates and propionates thereof. Of these amino group-containing silane coupling agents, those having an ethylenic double bond in the molecule, represented by N-$\beta$-(N-vinylben-zylaminoethyl)-$\gamma$-aminopropyltrimethoxysilane and salts thereof, are especially preferred.

The amino group-containing silane coupling agent is applied to the long glass fiber in an amount of 0.01 to 3% by weight, preferably 0.05 to 1% by weight, based on the long glass fiber. If the amount applied of the amino group-containing silane coupling agent is too small, the reinforcing effect by the long glass fiber is low. Use of too large an amount of the amino group-containing silane coupling agent is not preferred from the economical viewpoint and no further improvement of the physical properties can be expected.

Application of the amino group-containing silane coupling agent to the long glass fiber can be accomplished according to customary procedures. For example, there may be adopted a method in which the coupling agent is dissolved or dispersed in water or a mixed solvent of water and a hydrophilic solvent and the long glass fiber is immersed in the solution or dispersion, or the long glass fiber taken out from a glass fiber-preparing furnace is directly coated with the solution or dispersion by a roller. The amount of the coupling agent applied to the glass fiber can be adjusted by adjusting the concentration of the solution or dispersion. If a bundling agent such as polyvinyl alcohol is used at the glass fiber-preparing step, a glass fiber that can be easily handled is obtained, and the glass fiber is effectively protected.

(Glass fiber-reinforced norbornene polymer)

The glass fiber-reinforced norbornene polymer of the present invention has improved mechanical strengths such as flexural modulus and flexural strength, and even if the reinforced polymer is subjected to the boiling test, the mechanical strength is reduced only to a minor extent, and the reinforced polymer has an excellent heat resistance. As compared with the case where a long glass fiber not treated with the amino group-containing silane coupling agent is used, the adhesion between the polymer and the long glass fiber is high in the reinforced polymer of the present invention.

On the other hand, when an ordinary silane coupling agent is used, the polymerization inhibition arises and only a polymer that cannot be put into practical use is obtained.

Examples

The present invention will now be described in detail with reference to the following examples and comparative examples. The scope of the invention is not limited by these examples. Note, in the examples, all of "parts" and "%" are by weight unless otherwise indicated.

Example 1

A water-bundled long glass fiber (1 m in the length) composed of a roving (fiber diameter = 13 $\mu$m, 1 strand = 1,600 filaments) formed by bundling 24 strands was tied at the center of the length by a string, and this string was passed through a glass tube (60 cm) having an inner diameter of 6 mm and the two-folded roving was inserted into the tube along a length of 40 cm. The roving was cut at the folded end to obtain a glass tube having, inserted therein, a long glass fiber bundle having a length of 40 cm and comprising 48 strands as a whole.

One end of the glass tube was immersed in a solution (concentration = 1.5%) formed by dissolving a coupling agent shown in Table 1 in a mixed solvent of methanol/water (9/1) and the other end was connected to a vacuum line to suck the solution into the tube. The solution was removed from the tube and the glass fiber bundle was dried at 150°C for 3 hours. The amount of the glass fiber applied was 1% based on the glass fiber.

Separately, SIS was dissolved at a concentration of 5% in a norbornene monomer comprising 90% of dicyclopentadiene (DCP) and 10% of a cyclopentadiene trimer (mixture comprising 80% of an asymmetric trimer and 20% of a symmetric trimer), and the solution was charged in two vessels. Diethylaluminum chloride (DEAC), n-propyl alcohol (PrOH) and silicon tetrachloride were added to one vessel at concentrations of 40 mM, 52 mM and 20 mM, respectively, based on the monomer (liquid A). Tri(tridecyl)ammonium molybdate was added to the other vessel at a concentration of 10 mM based on the monomer (liquid B). The pot life of a mixture of the liquids A and B was 10 minutes at 30°C.

The liquid A was charged in a reaction vessel, and deaeration and nitrogen substitution were carried out. Then, the liquid B was added into the reaction vessel. After passage of 20 seconds, one end of the long glass fiber-inserted glass tube (nitrogen substituted had been conducted) was guided to the bottom of the reaction vessel, and the other end of the glass tube was connected to a vacuum line to suck the reaction liquid into the glass tube. When the long glass fiber in the glass tube was impregnated with the reaction liquid, suction of the reaction liquid was stopped, and the glass tube was heated at 80°C in a nitrogen atmosphere by a blaster to effect ring-opening bulk polymerization. Then, the glass tube was closed by a silicone rubber tube, and after-curing was carried out at 150°C for 15 minutes in the case of PrOH/Al = 1.2 or at 180°C for 15 minutes in the case of PrOH/Al = 1.3.

The glass tube was broken and a round rod-shaped glass fiber-reinforced polymer was obtained. The rod was cut into an appropriate length to obtain test pieces.

With respect to each sample, the bending test (span distance = 50 mm, bending speed = 1.3 mm/min) was carried out before and after boiling (120°C, 4 hours, 3 bar (2 kg/cm$^2$•G)), and the glass content was determined by the DSC measurement at a temperature-elevating rate of 10°C/min and the combustion test at 600°C for 1 hour in an electric furnace.

The results of the measurement of the physical properties are shown in Table 1.

## Note 1

The silane coupling agents shown in Table 1 are as follows.

(*1) Styryl silane: N-$\beta$-(N-vinylbenzylaminoethyl)-$\gamma$-aminopropyltrimethoxysilane hydrochloride (SZ-6032 supplied by Toray Silicone)

(*2) Phenylaminosilane: $\gamma$-$\beta$-benzylaminoethyl-$\gamma$-aminopropyltrimethoxysilane hydrochloride

(*3) Vinylsilane: vinyl-tris(2-methoxyethoxy)silane (A-172 supplied by Nippon Unicar)

(*4) Epoxysilane: $\gamma$-glycidoxypropyltrimethoxysilane (A-187 supplied by Nippon Unicar)

(*5) Acrylsilane: $\gamma$-methacryloxypropyltrimethoxysilane (A-174 supplied by Nippon Unicar)

(*6) Silyl isocyanate: 3-isocyanatopropyltriethoxysilane

(*7) Norbornenylsilane: 5-bicyclo 2,2,1 hepten-2-yltriethoxysilane

(*8) t-Butylsilane: t-butyltrimethoxysilane

## Note 2

The elastic modulus is a relative value calculated based on the assumption that the elastic modulus of the green resin is 200.

## Evaluation of Physical Properties

When N-$\beta$-(N-vinylbenzylaminoethyl)-$\gamma$-aminopropyltrimethoxysilane hydrochloride (abbreviated as "styrylsilane") or $\gamma$-$\beta$-benzylaminoethyl-$\gamma$-aminopropyltrimethoxysilane hydrochloride (abbreviated as "phenylaminosilane") is used, the permeability of the monomer-containing reaction liquid is better than when an untreated glass fiber is used, and the obtained glass fiber-reinforced polymer exhibits an improved flexural modulus. In contrast, when other general-purpose silane coupling agents are used, insufficient curing is caused or an uncured portion is formed, and the obtained polymers have no practical utility.

Moreover, when styryl silane is used, even after the boiling test, the flexural modulus and flexural strength can be maintained at high levels.

With respect to polymers filled with an untreated long glass fiber and a styrylsilane-treated long glass fiber, the cut sections are observed by an electron microscope. The adhesion between the polymer and the long glass fiber is good when the styrylsilane-treated long glass fiber is used, but the adhesion is poor when the untreated long glass fiber is used. Moreover, in the case of the untreated long glass fiber, the glass fiber is readily peeled off from the polymer and the adhesion of the polymer to the surface of the glass fiber is not observed.

Table 1

| | Silane coupling agent | Glass content (%) | Bending test 10 N/mm² (kg/mm²) | | | | Tg (°C) | State of polymer |
|---|---|---|---|---|---|---|---|---|
| | | | Before boiling | | After boiling | | | |
| | | | Elastic modulus | Strength | Elastic modulus | Strength | | |
| Present Invention | Styrylsilane (*1) | 62 | 2,500 | 45 | 2,500 | 35 | 142 | Completely cured |
| | Phenylaminosilane (*2) | 62 | 2,200 | 20 | 2,200 | 18 | 141 | Completely cured |
| Comparison | Vinylsilane (*3) | 64 | | | | | | Partially cured |
| | Epoxysilane (*4) | 64 | 1,300 | 18 | 1,600 | 20 | 149 | Completely cured |
| | Acrylsilane (*5) | 66 | | | | | | Partially cured |
| | Silyl isocyanate (*6) | 65 | | | | | | Partially cured |
| | Norbornenylsilane (*7) | 65 | | | | | | Insufficient curing |
| | t-Butylsilane (*8) | 65 | | | | | | Insufficient curing |
| | Untreated glass fiber | 62 | 2,000 | 25 | 1,900 | 19 | 142 | Insufficient adhesion of glass fiber |
| | Green resin | 0 | 200 | 9 | 200 | 10 | 157 | Completely cured |

Example 2

A glass tube having an inner diameter of 5.7 mm and a roving (water-bundled, fiber diameter = 13 μm) formed by bundling 16 strands were used, and in the same manner as described in Example 1, the long glass fiber was filled in a filling amount of 50% into the glass tube.

The glass fiber was treated with a coupling agent and a bundling agent, as shown in Table 2. The treating agents were used in the form of an aqueous solution or suspension (0.3%) and were applied to the glass fiber so that the applied amount was 0.3%.

The liquids A and B having the same compositions as described in Example 1 were cast in the glass fiber-filled glass tube by using a urethane-casing machine, and after the casting operation, curing was conducted at 130°C for 30 minutes. These operations were carried out in a nitrogen atmosphere.

The physical properties of the obtained glass fiber-reinforced polymers were measured. The results are shown in Table 2.

Table 2

| | | Coupling agent | Bundling agent | Flexural modulus 0.1 MPa (kg/cm$^2$) | Flexural strength 0.1 MPa (kg/cm$^2$) |
|---|---|---|---|---|---|
| Present Invention | | AY-043-032 | - | 1,240 | 34 |
| | | AY-043-039 | - | 1,260 | 35 |
| | | SZ-6032 | - | 1,070 | 31 |
| | | SZ-6032 | PVA-117 | 1,081 | 32 |
| Comparison | | Untreated glass fiber | | 655 | 17 |

Note AY-043-032: styrylsilane acetate AY-043-039: lowly chlorinated styrylsilane SZ-6032: styrylsilane PVA-117: polyvinyl alcohol (supplied by Kuraray)

Evaluation of Physical Properties

When styrylsilane acetate, lowly chlorinated styrylsilane or styrylsilane is used as the coupling agent, the flexural modulus and flexural strength are improved. If a bundling agent is used, the bundling property of the glass fiber is good and the glass fiber is easily handled.

[Effects of the Invention]

According to the present invention, a glass fiber-reinforced norbornene polymer having improved mechanical characteristics such as flexural modulus and flexural strength is obtained without inhibition of the ring-opening polymerization of the norbornene monomer. This glass fiber-reinforced norbornene polymer can be used as various types of molded articles widely in the fields where high strength and high heat resistance are required.

**Claims**

1. A glass fiber-reinforced norbornene polymer comprising a long glass fiber surface-treated with an amino group-containing silane coupling agent and a polymer obtained by ring-opening bulk polymerization of a norbornene monomer having a tricyclic or higher cyclic structure.

2. A glass fiber-reinforced norbornene polymer as set forth in claim 1, wherein the amino group-containing silane coupling agent has an ethylenic double bond.

3. A process for the production of glass fiber-reinforced norbornene polymer, which comprises subjecting a norbornene monomer having a tricyclic or higher cyclic structure to ring-opening bulk polymerization by using a methathesis catalyst in the presence of a long glass fiber surface-treated with an amino group-containing silane coupling agent.

**Patentansprüche**

1. Glasfaser-verstärktes Norbornen-Polymer, umfassend eine lange Glasfaser, die mit einem eine Amino-Gruppe enthaltenden Silan-Kupplungsmittel oberflächenbehandelt worden ist, und ein Polymer, das durch Ringöffnungs-Polymerisation in der Masse aus einem Norbornen-Monomer mit einer tricyclischen oder höheren cyclischen Struktur erhalten worden ist.

2. Glasfaser-verstärktes Norbornen-Polymer nach Anspruch 1, worin das die Amino-Gruppe enthaltende Silan-Kupplungsmittel eine ethylenische Doppelbindung besitzt.

3. Verfahren zur Herstellung eines Glasfaser-verstärkten Norbornen-Polymers, umfassend die Polymerisation in der Masse eines Norbornen-Monomers mit einer tricyclischen oder höheren cyclischen Struktur unter Einsatz eines Metathese-Katalysators in Gegenwart einer langen Glasfaser, die mit einem eine Amino-Gruppe enthaltenden Silan-Kupplungsmittel oberflächenbehandelt worden ist.

**Revendications**

1. Polymère de norbornène renforcé aux fibres de verre, comprenant une fibre de verre longue traitée en surface par un agent de couplage à base de silane contenant des groupes amino et un polymère obtenu par polymérisation en masse par ouverture du noyau d'un monomère de norbornène ayant une structure tricyclique ou cyclique supérieure.

2. Polymère de norbornène renforcé aux fibres de verre selon la revendication 1, dans lequel l'agent de couplage à base de silane contenant des groupes amino possède une double liaison éthylénique.

3. Procédé de production de polymère de norbornène renforcé aux fibres de verre, qui consiste à soumettre un monomère de norbornène ayant une structure tricyclique ou cyclique supérieure à une polymérisation en masse par ouverture du noyau en utilisant un catalyseur de métathèse en présence d'une fibre de verre longue traitée en surface par un agent de couplage à base de silane contenant des groupes amino.